Europäisches Patentamt

European Patent Office

Office européen des brevets

(19)

(11) Veröffentlichungsnummer: **0 097 787**

A2

(12) **EUROPÄISCHE PATENTANMELDUNG**

(21) Anmeldenummer: **83104097.7**

(22) Anmeldetag: **27.04.83**

(51) Int. Cl.³: **B 60 C 11/00**
**B 60 C 11/18**

(30) Priorität: **26.06.82 DE 3223960**

(43) Veröffentlichungstag der Anmeldung:
**11.01.84 Patentblatt 84/2**

(84) Benannte Vertragsstaaten:
**AT CH DE FR GB IT LI SE**

(71) Anmelder: **Continental Gummi-Werke**
**Aktiengesellschaft**
**Königsworther Platz 1 Postfach 169**
**D-3000 Hannover 1(DE)**

(72) Erfinder: **Burchert, Helmut, Dr.-Ing.**
**Brillantweg 4**
**D-3008 Garbsen 1(DE)**

(72) Erfinder: **Kaiser, Günter Dr. rer.nat.,Dipl.-Chem.**
**Schieferkamp 23**
**D-3000 Hannover 91(DE)**

(54) **Fahrzeugluftreifen.**

(57) Diese Reifen sind mit einem Gürtel versehen und in ihrem oberhalb des Gürtels befindlichen Bereich unter Bildung einer Grundschicht (base) und einer die Lauffläche bildenden Oberschicht (cap) zweischichtig ausgeführt. Um zu erreichen, daß der Reifen bei unterschiedlichen Abnutzungszuständen seines Laufstreifens besondere Eigenschaften für den Fall erhält, daß er als Winterreifen ausgeführt und zum Teil abgenutzt ist, wird die Trennfläche zwischen der Grundschicht und der Oberschicht so gelegt, daß sie sich oberhalb des Grundes der Profilvertiefungen befindet. Damit kann der in die Laufflächenelemente hineinragende Teil der Grundschicht eine vorzügliche Sommerlauffläche insbesondere dann bilden, wenn die Grundschicht eine größere Naßrutschfestigkeit aufweist als die Oberschicht und insbesondere auch im Vergleich zur Oberschicht härter gestaltet ist.

FIG.1

EP 0 097 787 A2

Croydon Printing Company Ltd.

## Fahrzeugluftreifen

Die Erfindung betrifft einen im wesentlichen aus Gummi oder gummiähnlichen Stoffen bestehenden, mit Verstärkungseinlagen versehenen,
als Gürtelreifen ausgebildeten Fahrzeugluftreifen, der in seinem
oberhalb des Gürtels befindlichen Teil zweischichtig ausgeführt ist
und oberhalb einer Grundschicht (base) eine die Lauffläche bildende
Oberschicht (cap) aufweist.

Ein solcher Schichtaufbau oberhalb des Gürtels hat die Aufgabe,
die Laufeigenschaften des Reifens zu verbessern und eine günstige
Lagerung und Bindung des eigentlichen Laufstreifens herbeizuführen.
Aus diesen Gründen befindet sich die Trennfläche zwischen den
beiden Schichten unterhalb des Grundes der Reifenprofilierung, und
zwar vorzugsweise so, daß die Trennfläche noch mit geringem
Abstand von diesem Grund entfernt ist.

Der Erfindung liegt im wesentlichen die Aufgabe zugrunde, diesen
Schichtaufbau so zu gestalten, daß der Reifen bei unterschiedlichen Abnutzungszuständen seines Laufstreifens besondere Eigenschaften erhält. Insbesondere wird angestrebt, den Reifen optimal
für den Sommer- und den Winterbetrieb nutzen zu können.

Zur Lösung dieser Aufgabe ist erfindungsgemäß die zumindest im
wesentlichen parallel zur Lauffläche des neuen, unbenutzten
Reifens verlaufende Trennfläche zwischen der Oberschicht und
der Grundschicht oberhalb bzw. radial außerhalb des Grundes der
Profilvertiefungen anzuordnen. Demgemäß besteht die Wurzel der
Profilelemente über einen Höhenabschnitt hinweg, z.B. über eine
Höhe von 4 bis 6 mm aus dem Gummi der Grundschicht, während die
darüberliegenden Höhenabschnitte in üblicher Weise von der Oberschicht gebildet sind.

Dieser Vorschlag eröffnet die Möglichkeit, dem Luftreifen ein
vergleichsweise grobes Stollen- oder Rippenprofil zu verleihen, um so den Reifen für die Winterverwendung geeignet zu machen. Wird im Zuge einer solchen Verwendung des Reifens der Laufstreifen abgenutzt und schließlich die Trennfläche erreicht, so ergibt sich ein in besonderer Weise für die Sommerverwendung geeignetes Reifenprofil, und zwar insbesondere dann, wenn die Grundschicht härter ausgeführt ist als die Oberschicht und die Grundschicht zudem eine Naßrutschfestigkeit hat, die größer ist als diejenige der Oberschicht.

Bei der Winterverwendung und den dabei vorhandenen hohen Stollen und Rippen ist somit eine vergleichsweise weiche Gummimischung wirksam, die auf einer härteren, später als Sommerlaufschicht dienenden Gummimischung angeordnet ist.

Vorzugsweise wird dabei für die Oberschicht mit den beim Winterbetrieb aktiven Elementen eine Härte von etwa 55 bis 63 Shore A gewählt, während für die Unterschicht, die späterhin die Sommerlauffläche bildet, eine Härte von 60 bis 75, insbesondere aber eine Härte von 65 bis 70 Shore A gewählt wird.

Weitere Einzelheiten der Erfindung werden anhand der Zeichnung erläutert, in der ein Ausführungsbeispiel dargestellt ist. Es zeigen:

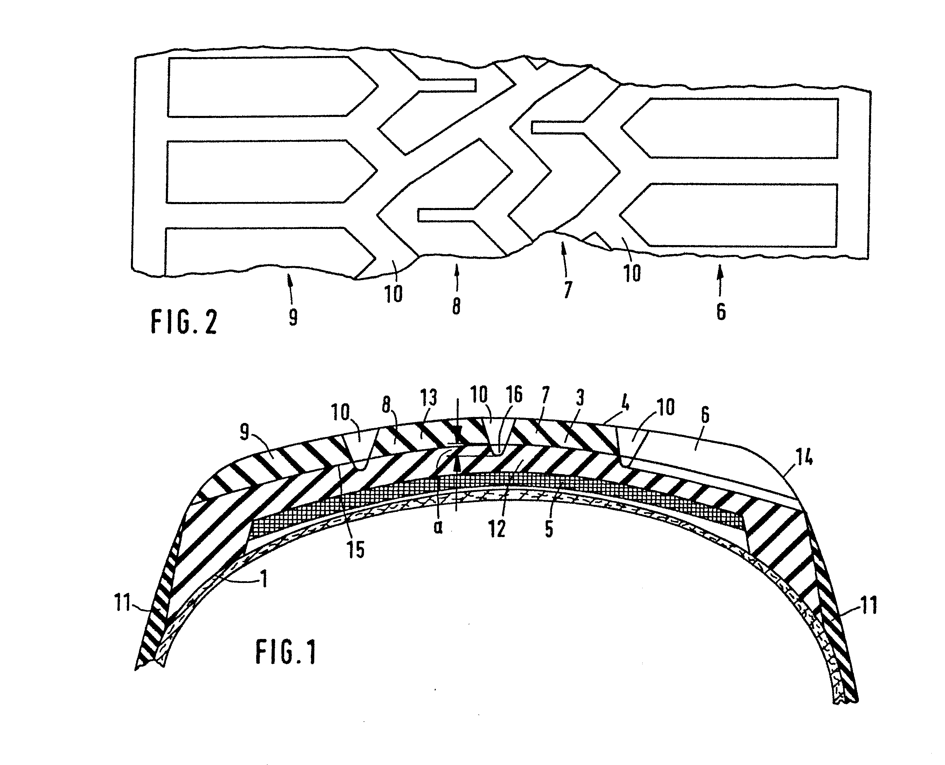

Fig. 1 einen radialen Teilschnitt durch einen Fahrzeugluftreifen und

Fig. 2 eine Teildraufsicht auf die Lauffläche des Reifens gemäß Figur 1.

Der im wesentlichen aus Gummi bestehende Reifenkörper hat eine Radialkarkasse 1, die in üblicher Weise in den Reifenwülsten verankert ist. Zwischen dem Laufstreifen 3 und der Radialkarkasse 1 befindet sich ein sich im wesentlichen über die Breite der Lauffläche 4 erstreckender, zugfester Gürtel 5, der in üblicher Weise aus Cordgewebelagen zusammengesetzt ist.

- 3 -          0097787

Die Lauffläche wird von Klötzen gebildet, die in vier Umfangsreihen 6, 7, 8 und 9 angeordnet sind, welche ihrerseits durch im wesentlichen zickzackförmig verlaufende Nuten 10 voneinander getrennt sind.

Während die Radialkarkasse 1 seitlich durch Seitengummistreifen 11 abgedeckt ist, befindet sich zwischen den beiden Seitengummistreifen 11 und oberhalb des Gürtels 5 eine Gummimischung, welche die Grundschicht 12 des Laufstreifens 3 bildet. Oberhalb dieser Grundschicht 12 ist die Oberschicht 13 angeordnet; die Trennfläche zwischen den Schichten 12 und 13, welche im wesentlichen parallel zum Mittelteil der Lauffläche 4 verläuft, also im Bereich der Rundschultern 14 nicht gerundet ist, hat die Bezeichnung 15.

Die Trennfläche 15 ist hierbei so verlegt, daß sie sich nahe oberhalb des Grundes 16 der Profilvertiefungen 10 befindet, und zwar mit einem Abstand a, der beim fertigen Reifen 3 bis 7 mm, vorzugsweise etwa 4 mm beträgt.

Die Oberschicht 13 hat eine Shorehärte von 55 bis 63 Shore. Sie ist weicher eingestellt als die Grundschicht 12, die eine größere Härte, vorzugsweise eine Härte von 60 bis 75, insbesondere eine Härte von 65 bis 70 Shore aufweist. Die letztgenannte Mischung hat zudem im Vergleich zur Oberschicht 13 eine nennenswert größere Naßrutschfestigkeit, die im Vergleich zu der Oberschicht 13 um etwa 5 % größer ist.

Das Reifenprofil ist ein sogenanntes Winterprofil, so daß demgemäß der Reifen in besonderer Weise für die Winterverwendung geeignet ist. Ist nach einer bestimmten Laufzeit eine Abnutzung eingetreten, also die Oberschicht 13 nicht mehr vorhanden, so bildet die Grundschicht 12 die Lauffläche eines Reifens, die über eine gute Naßrutschfestigkeit und insgesamt über gute Eigenschaften verfügt, die von einem Sommerreifen gefordert werden.

0097787

Der erfindungsgemäße Reifen ist somit nicht nur als Winterreifen geeignet. Er kann vielmehr nach einer gewissen Laufzeit mit Erfolg als Sommerreifen eingesetzt werden. Er ist somit einer Verwendung zuführbar, die ein Winterreifen nach einer gewissen Abnutzung nicht mehr zuläßt.

Ansprüche:

1. Im wesentlichen aus Gummi oder gummiähnlichen Stoffen bestehender, mit Verstärkungseinlagen versehener, als Gürtelreifen ausgebildeter Fahrzeugluftreifen, der in seinem oberhalb des Gürtels befindlichen Teil zweischichtig ausgeführt ist und oberhalb einer Grundschicht (base) eine die Lauffläche bildende Oberschicht (cap) aufweist, dadurch gekennzeichnet, daß die zumindest im wesentlichen parallel zur Lauffläche des ungebrauchten Reifens verlaufende Trennfläche (15) zwischen der Oberschicht (13) und der Unterschicht (12) oberhalb (radial außerhalb) des Grundes (16) der Profilvertiefungen (10) angeordnet ist.

2. Reifen nach Anspruch 1, dadurch gekennzeichnet, daß sich die Trennfläche (15) etwa 3 bis 6 mm, vorzugsweise etwa 4 mm oberhalb des Grundes (16) der Profilvertiefungen (10) befindet.

3. Reifen nach Anspruch 1, dadurch gekennzeichnet, daß die Grundschicht (12) eine gegenüber der Oberschicht (13) größere Härte hat.

4. Reifen nach Anspruch 3, dadurch gekennzeichnet, daß die Härte der Oberschicht (13) etwa 55 bis 63 Shore A beträgt, während die Grundschicht (12) eine Härte von 60 bis 75, insbesondere von 65 bis 70 Shore A hat.

5. Reifen nach Anspruch 1, dadurch gekennzeichnet, daß die Grundschicht (12) im Vergleich zu der Oberschicht (13) eine größere Naßrutschfestigkeit hat.

6. Reifen nach Anspruch 5, dadurch gekennzeichnet, daß die Naßrutschfestigkeit der Oberschicht (13) etwa 3 bis 8 %, insbesondere 5 % größer ist.

7. Reifen nach Anspruch 1, dadurch gekennzeichnet, daß sein Laufflächenprofil aus groben Klötzen, Stollen oder dergl. besteht.


Hannover, den 23. Juni 1982
82-30 P/D                    D/Fr

0097787

FIG.2

FIG.1